# EUROPEAN PATENT SPECIFICATION

(11) **EP 3 464 061 B1**
(45) Date of publication and mention of the grant of the patent: **30.10.2019**
(21) Application number: 17737863.5
(22) Date of filing: 30.05.2017
(51) Int. Cl.: B64C 11/28, B64C 27/50, B64C 39/02

(54) **PROPELLER-HUB ASSEMBLY WITH FOLDING BLADES FOR VTOL AIRCRAFT**
PROPELLERNABENANORDNUNG MIT ZUSAMMENKLAPPBAREN SCHAUFELN FÜR SENKRECHT STARTENDES UND LANDENDES FLUGZEUG
ENSEMBLE HÉLICE-MOYEU AYANT DES PALES REPLIABLES POUR UN AÉRONEF À DÉCOLLAGE ET ATTERRISSAGE VERTICAUX (VTOL)

(30) Priority: 30.05.2016 GB 201609465
(43) Date of publication of application: 10.04.2019
(73) Proprietor: Kapeter, Luka, 31000 Osijek (HR)
(72) Inventor: Kapeter, Luka, 31000 Osijek (HR)
(74) Representative: Sucic, Tatjana
(86) International application number: PCT/HR2017/000006
(87) International publication number: WO 2017/208037

(56) References cited:
- DE-A1- 3 240 995
- DE-C1- 4 426 403
- US-A1- 2016 031 556

## Description

### Field of invention

The present invention relates in general to the field of vertical take-off and landing (VTOL) aircraft. In particular, the present invention relates to a propeller-hub assembly used for the VTOL aircrafts or VTOL UAV or VTOL aircraft models whose propeller blades are folding during flight and to the multi flight modes being enabled by said assembly.

### Description of the Background Art

VTOL aircraft have two specific flight phases: vertical take-off, hover and landing and horizontal forward flight. Transition between the vertical to the horizontal flight is referred to as outbound, whereas the transition between the horizontal and vertical flight is referred to as inbound transition. To be able to switch between different phases of flight it is required to either rotate the propellers (rotors) or to rotate the whole wing carrying propellers (rotors). Tiltrotor aircraft are hybrids between traditional helicopters and traditional propeller driven aircraft. Typical tiltrotor aircraft has nacelles with rotor systems that are capable of rotating relative to the aircraft fuselage. Tiltrotor aircraft are capable of converting from a helicopter mode, in which the aircraft can take-off, hover, and land like a helicopter; to an airplane mode, in which the aircraft can fly forward like a fixed- wing airplane. The VTOL is capable of vertical take-off and landing, hovering and traveling at slow speeds. In addition, the VTOL permits high-speed forward flight that allows the increase of the range of an aircraft. There are various types of UAV configurations. Generally, such UAV configurations may be separated into three categories. A first UAV configuration is a fixed wing configuration that is similar to an airplane. A second configuration is a helicopter type configuration that utilizes a rotor mounted above the vehicle to provide lift and thrust. A third configuration is a ducted type configuration having a fuselage with a ducted rotor that provides vertical take-off and landing capabilities. Each of these UAV configurations provides certain benefits and drawbacks. According to the present invention VTOL configuration is a folding propeller type configuration providing vertical take-off and landing capabilities and additionally allows high speed during a horizontal flight.

-Regarding the propellers, two types of propellers are available on the market today, standard fixed pitch un-foldable propellers and folding propellers. Standard fixed pitch un-foldable propellers have a downside of generating too much drag if they are turned off during the forward progressing flight which is required by some versions of VTOL aircraft's. Folding propeller is a type of propeller whose blades automatically unfold when the engine is turning and then fold back or "feather" when the engine stops. Folding propellers are found on sailing yachts, on model airplanes, and increasingly on self-launching gliders and small motor gliders. The purpose of folding propellers is to reduce drag when sailing or soaring, respectively. Folding propellers are opened outwards by centrifugal force when the engine/motor is running, but when the engine stops, the pressure of airflow or water flow forces the blades to fold back. Folding propellers used to be mostly two-bladed, but 3-bladed and 4-bladed versions are now available. Folding propellers are more applicable during the horizontal flight if the motor is turned off during that mode, because it minimizes drag and thereby allowing more speed or reduced fuel consumption. Folding propellers generate less noise and vibration than fixed blade propellers, when not in use, because the airflow will not cause the propeller to rotate (windmill). However, such a propeller is not practical to use in the vertical take-off, hover or landing phases of flight, because it requires the propeller to be started in the horizontal flight mode. Both folding and unfolding propellers can be used in the VTOL configuration, but as explained above, none of them is fulfilling all of the requirements. This invention is taking the positive sides of both propeller types with an innovative blades and propeller-hub design that allows inbound and outbound VTOL transitions without compromises.

Document US2016/031556A1 discloses an aerial vehicle adapted for vertical takeoff and landing using pivoting thrust producing elements for takeoff and landing.

Document CA2802389 describes the foldable rotor system comprising a rotor assembly operably associated with a driveshaft, the driveshaft being operable associated with an engine, the rotor assembly comprising a rotor blade connected to a grip pin. The airbags disclosed in description and claims act as a buffer in order to minimize contact between the rotor blades and the nacelle, as well as tailor aerodynamic airflow around the rotor blades while being in the folded position.

Document DE 3240995 describes a motorglidercomprising the propeller blades being capable of folding forwards, being possible to pull the folded-together propeller rearwards into the fuselage and it being possible to close the opening or openings which exists or exist on the fuselage tip once the propeller has been pulled in in an aerodynamically favourable manner. The present invention is directed to improved foldable propeller blades, and a propeller-hub assembly which may be utilized in a VTOL aircraft, which may be a UAV aircraft, which is capable of vertical take-off and landing and is capable of traveling at slow speeds including hover. It also permits high speed horizontal flight (i.e. forward flight) to allow the increased range of the VTOL aircraft.

It is an object of the present invention to set forth a solution by introducing a mechanism that disables the folding of the blades into a stowed position during a vertical flight regime.

### Summary of the invention

A first aspect of the present invention relates to a folding propeller-hub assembly. In particular, the aspect concerns an assembly preferably for a VTOL UAV aircraft, the assembly including a propeller-hub, folding blades having a counter weight, a bedplate, a push rod firmly attached to the bedplate, a spinner, a compression spring, a motor, a rotating plate rotatably connected to a restraint plate. The propeller-hub assembly for a vertical take-off and landing (VTOL) aircraft, the propeller-hub assembly, comprising the motor arranged between a propeller-hub and the rotating plate; a bedplate operably associated with the propeller-hub to fold or respectively unfold a plurality of propeller blades; the compression spring arranged within the spinner, the compression spring operably associated with the bedplate; the push rod positioned in a rotational axis along the propeller-hub assembly, the push rod operably associated with the compression spring; the restraint plate by virtue of the push rod operably associated with the compression spring, if the push rod is being pushed by the restraint plate the spring is compressed enabling the propeller blades to fold into a stowed position if motor the is not running, or if the motor is running, due to the action of centrifugal force, the propeller blades are forced in an expanded position. The push rod extends from the bedplate up to the restraint plate and is movable along the rotational axis of the propeller-hub assembly; wherein the propeller-hub assembly is rotatably arranged in respect to the restraint plate. The spinner is connected with the propeller-hub and the compression spring is placed between the spinner and the bedplate in such a way that the spring is pushing onto the bedplate. Instead of using the spring, alternatively electromagnetic, pneumatic or hydraulic devices working on the principle of servo motors or linear actuators can be used. Two bedplate pins are located on the bedplate wherein the bedplate pins are touching the counterweights of the blades. If the spring is fully compressed and the bedplate pins are in the furthest/remotest position from the propeller-hub, such position of the bedplate pins enables the blades to fold into a stowed position if the motor is not running, or moreover to open due to the centrifugal force if the motor is started. If the spring is not compressed, the bedplate pins are in the nearest position to the propeller-hub and are pressing on the counterweight of the blades thus keeping them in the open unfolded position even if the motor is not running.

During the vertical flight or hover mode the rotating plate supporting the assembly is vertically oriented and perpendicular to the restraint plate. The push rod, which is firmly attached to the bedplate is passing through the propeller-hub, the motor and the rotating plate. In this flying mode, the push rod is not pushed by the restraint plate in which position the spring is not compressed, thus enabling expanded position of the blades. Furthermore, when the rotating plate is vertically oriented and perpendicular to the restraint plate, the blades are always in the expanded position irrespective if the motor is running or not, thus enabling starting of the motor for vertical take-off with blades being in expanded position.

During the horizontal forward flight mode, the rotating plate supporting the assembly is horizontally oriented and parallel to the restraint plate. The push rod is being pushed by the restraint plate and the spring is compressed thus enabling the blades to fold into the stowed position if said motor is not running, or due to the action of centrifugal force opening/expanding of the blades when the motor is running.

The propeller-hub assembly of the present invention may form a part of a tilt rotor assembly of a VTOL aircraft and the like.

According to a second aspect, the present invention relates to a VTOL aircraft comprising at least one propeller-hub assembly of the present invention.

According to a third aspect, the present invention relates to a VTOL UAV aircraft comprising at least one propeller-hub assembly of the present invention.

According to a fourth aspect, the present invention relates to a kit comprising a propeller-hub assembly of the present invention preferably mounted on a model VTOL aircraft or model VTOL UAV aircraft.

According to a further aspect, the present invention relates to applicable flight modes enabled by the propeller-hub assembly of the present invention.

### Brief description of the Drawings

Present invention, as well as, a preferred mode of its use, and further objectives and advantages thereof, will best be understood by reference to the following detailed description when read in conjunction with the accompanying drawings, wherein:
Figure 1 is a perspective view of a foldable propeller blades and a propeller-hub assembly according to the preferred embodiment of the present application during a vertical flying mode,
Figure 2 is a perspective view of a foldable propeller blades and propeller-hub assembly according to the preferred embodiment of the present application during a horizontal flying mode wherein rotor blades are folded into a stowed position where the motor is not running,
Figure 3 is a perspective view of a foldable propeller blades and propeller-hub assembly according to the preferred embodiment of the present application during a horizontal flying mode wherein blades are in expanded position where the motor is running,
Figure 4 is a perspective detailed schematic exploded view of a foldable propeller blades and propeller-hub assembly according to the preferred embodiment of the present application,
Figure 5 is a cross section of propeller-hub assembly wherein blades are in expanded position during a vertical flight mode,
Figure 6 is a cross section of the propeller-hub assembly wherein blades are folded into a stowed position during a horizontal flying mode where the motor is not running,
Figure 7 is a cross section of the propeller-hub assembly wherein blades are in expanded position during a horizontal flying mode where the motor is running,
Figure 8 is a schematic representation of the VTOL aircraft during a vertical flight mode,
Figure 9 is a schematic representation of the VTOL aircraft during a transition,
Figure 10 is a schematic representation of the VTOL aircraft during a forward flight mode and
Figure 11 illustrates a yaw control of the VTOL aircraft.

### Detailed description of the invention

Illustrative embodiments of the assembly of the present application are described below. The use of terms such as "above," "below," "upper," "lower," or other like terms to describe a spatial relationship between various components or to describe the spatial orientation of aspects of such components should be understood to describe a relative relationship between the components or a spatial orientation of aspects of such components, respectively, as the assembly described herein may be oriented in any desired direction. Furthermore, as described herein, the substantially vertical orientation and the substantially horizontal orientation of the propeller-hub assembly are defined with respect to the orientation of the axis of the propeller rotation relative to the surface of the Earth. It must be noted that as used herein and in the appended claims, the singular forms "a", "an", and "the" include plural referents unless the context clearly dictates otherwise. The present application represents a unique assembly for the folding or unfolding of propeller blades during forward or vertical flight. More particularly assembly according to the present invention provides vertical helicopter flying mode and horizontal aircraft flying mode with blades in expanded position, wherein in horizontal aircraft flying mode said assembly provides the rotor blades being folded into a stowed position or in an expanded position. During horizontal aircraft/glider flying mode where rotor blades are folded into stowed position the drag is being reduced, while in case when the rotor blades are in expanded position motor is running and improving performance during airplane mode. According to the preferred embodiment of the present invention three modes of operation are provided. In vertical take-off, landing and hover mode of operation propeller blades are arranged in expanded position. During this mode of operation propeller blades are always arranged in expanded position regardless the motor is running or not. Therefore, even before staring the motor propeller blades are arranged in expanded position. This feature enables starting of the motor where the propeller blades are expanded and positioned parallel to the ground, while propeller hub assembly is arranged perpendicular to the ground. Second and third modes of operation relate to the horizontal flying mode, wherein second mode of operation provides propeller blades being folded into a stowed position where the motor is not running whereby the drag is reduced and third mode of operation provides blades in expanded position where the motor is running. In the third mode of operation propeller blades are unfolded under action of centrifugal force caused by starting the motor. A technical advantage of assembly according to present invention includes the capability to fold rotor blades safely and with fewer components.

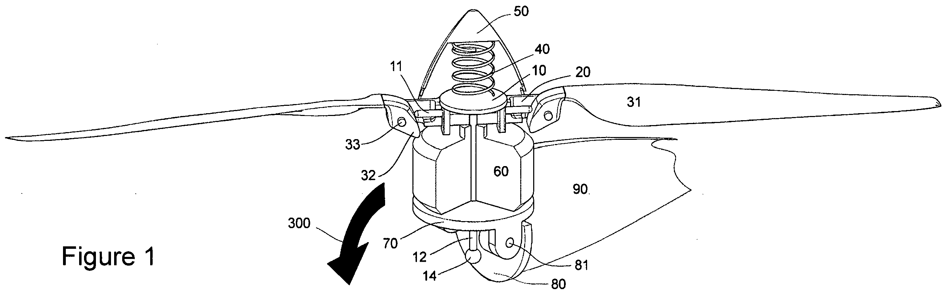

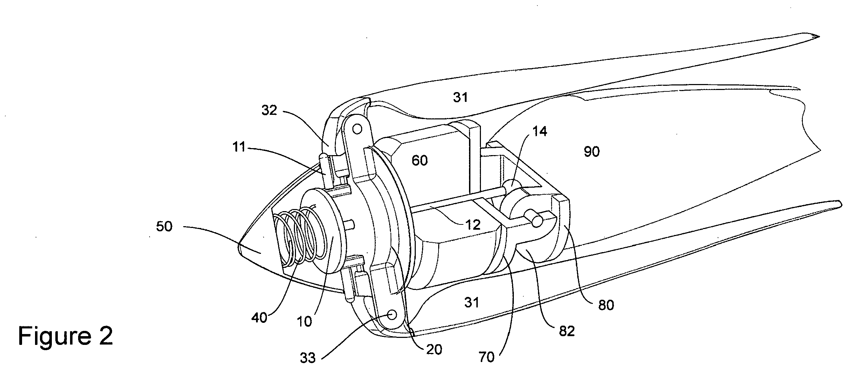

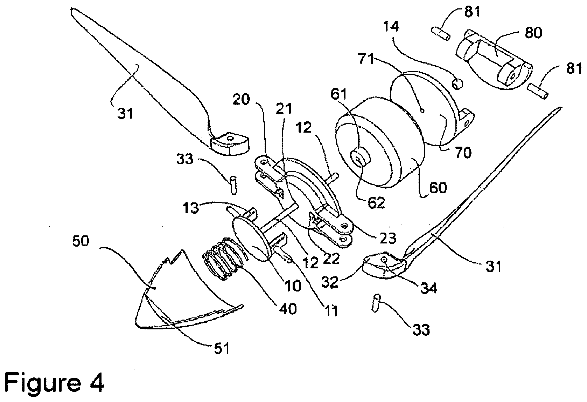

Figure 1 shows a perspective view of a foldable propeller blades in expanded position during a vertical flight mode and a propeller-hub assembly and figure 4 shows a perspective detailed schematic exploded view of a foldable propeller blades and a propeller-hub assembly according to the preferred embodiment of the present invention. Propeller-hub assembly with foldable blades 31 features a propeller-hub 20, a motor 60, a rotating plate 70 and a restraint plate 80 connected to a motor pod or a fuselage 90, a compression coil spring 40, spinner 50, a bedplate 10 and a push rod 12. The spinner 50, the compression coil spring 40, the bedplate 10, the propeller hub 20, the motor 60 and the rotating plate 70 are arranged in sequence along a rotational axis of the propeller-hub assembly, wherein the push rod 12 is passing through said rotational axis, wherein all said subsequently aligned components rotate by an angle that is in the range between 85° and 95° in respect to the restraint plate 80 and respectively to the fuselage 90, wherein when all components are oriented perpendicularly to a surface 82 of the restraint plate 80 the fuselage 90, the propeller-hub assembly is in take-off or landing or hover flying mode and where all said components are arranged parallel with the restraint plate 80 the propeller-hub assembly is in horizontal airplane flying mode. The rotational axis of the propeller hub assembly is also an axis of the propeller rotation. The push rod 12 extends from the bedplate 10 and to which push rod 12 is firmly attached, up to the restraint plate 80, wherein the push rod 12 is movable along the rotational axis of the propeller-hub assembly. Shift of the push rod 12 is defined by the force maintained by the compression coil spring 40. At its free end the push rod 12 has attached a rounded ball like element 14 that directly abuts to an upper side of the restraint plate 80. The motor 60 is longitudinally arranged between the propeller hub 20 and the rotating plate 70, wherein motor 60 abuts on said rotating plate 70. The motor 60 is firmly connected to the propeller-hub 20 by a motor hub attachment 61. Further the motor 60 has a hollow axle 62 through which the push rod 12 passes. The rotating plate 70 is pivotally connected to a restraint plate 80 by the means of axle pins 81. The upper surface 82 of the restraint plate 80 has two hinges extending in the direction of the rotating plate 70, each hinge having a bore through which axle pins 81 undergo and pivotally connect the rotating plate 70 and the restraint plate 80. The bottom side of the restraint plate 80 is firmly attached to the fuselage 90. The restraint plate 80 has substantially semicircle shape enabling abutting and supporting the rotating plate 70 when the plate 80 and rotating plate 70 are mutually perpendicularly positioned. The restraint plate 80 in respect to the rotating plate 70 is mainly arranged in two positions and the tilt under different positions can be provided by the use of a servo mechanism. Referring to figure 1, during a vertical flying mode, the rotating plate 70 is arranged perpendicularly in respect to the restraint plate 80. In this flying mode, the compression coil spring 40 is expanded since the rounded element 14 arranged at the free end of the push rod 12 is not pressing against the restraint plate 80. Referring to figure 2, during a horizontal flying mode when the motor 60 is not running, the rotating plate 70 is arranged parallel in respect to the restraint plate 80. In this flying mode, the compression coil spring 40 is compressed since the rounded element 14 arranged at the free end of the push rod 12 is being pushed against the restraint plate 80.

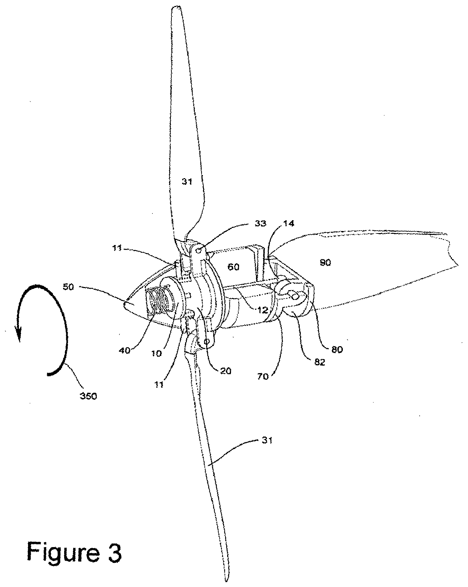

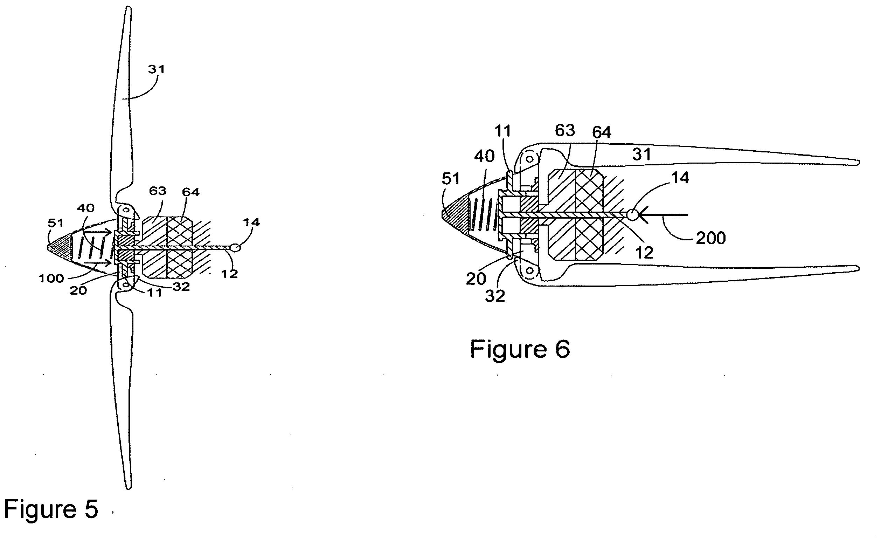

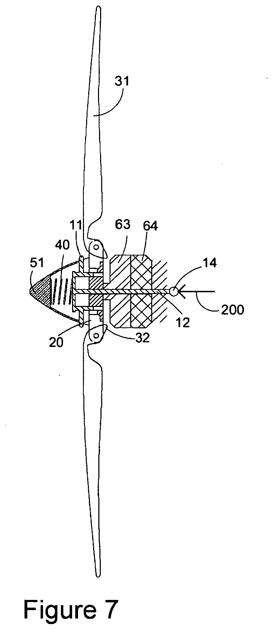

The bedplate 10 has circular shape and is arranged along the rotational axis between the compression coil spring 40 and the propeller-hub 20. The compression coil spring 40 is arranged along the rotational axis between the bedplate 10 and the spinner bottom 51 of the spinner 50, wherein the spring 40 resists with one end against the spinner bottom 51 and with the other end against upper flat surface of the bedplate 10. Underside of the bedplate 10 is provided with a plurality of bedplate tie rods 13 extending in the direction of the propeller-hub 20, where, as illustrated on figs. 1 to 4, a pair of tie rods 13 are arranged perpendicular to the bedplate 10 underside. A top of the propeller-hub 20 is provided with a plurality of slots 22 arranged to receive the tie rods 13 in order to provide coupling between the bedplate 10 and the propeller-hub 20. Each tie rod 13 is provided with a bedplate pin 11 arranged perpendicular to the tie rod 13, wherein the bedplate pin 11 is extending outwardly and is positioned above each blade 31 extension part 32. Figures 1 to 7 show the propeller rotor hub assembly with two oppositely arranged propeller blades 31. Number of the bedplate guides 13 and bedplate pins 11 carried out as integral part of the bedplate 10 corresponds to the number of propeller blades 31. For example, three four, six, or more blades may be utilized and according to the number of blades, the bedplate 10 comprises corresponding number of bedplate guides 13 having bedplate pins 11 positioned as earlier described. Respectively the propeller-hub 20 comprises corresponding number of slots 22 for providing coupling between the bedplate 10 and the propeller-hub 20. Design of the propeller blades 31 constitutes the blade and an extension part 32. The extension part 32 has a parallelepiped shape having an outer curved surface that abuts and is positioned under the pin 11, along which curved surface the pin 11 slides as it moves along the rotational axis under the action of the compression spring 40, and thereby interchange the position of the propeller blade 31 from folded into expanded position. Beside its shape, the extension part 32 has size enabling the propeller blades 31 to fold or respectively unfold in expanded position, and additional weight that enables its function as counterweight. The propeller blade 31 is connected to the propeller-hub 20 by means of a propeller blade pin axis 33 and a propeller blade pin hole 34 arranged at and passing throughout the extension part 32. Position of the propeller blade pin hole 34 and the curvature of outer surface of the extension part 32 is determined by the length of the pin 11, the pin 11 length is such that pin's 11 rounded ends slide over the curved outer surface of the extension part 32 and thereby interchange the position of the propeller blades 31. In figs. 1 and 3 the propeller blades 31, shown during a vertical flight mode, are positioned perpendicular to the axis of rotation in expanded position since the pins 11 that are being integral part of the bedplate 10 are pressing down the extension blade part 32 due to the force 100 (shown in fig. 5) maintained by the compression coil spring 40 arranged along the rotational axis between the spinner bottom 51 and bedplate 10. It is important to mention that such configuration is preventing the propeller blades 31 to fold into a stowed position which enables to run the motor 60 from a static condition in the vertical flight mode without blades hitting the fuselage sides. The outbound transition is a transition from the vertical flight mode, which configuration of the propeller-hub is illustrated in Figure 1, to the horizontal flight mode where the propeller-hub configuration is illustrated in Figure 2 and Figure 3. The direction of the outbound transition is shown by the arrow 300 in Figure 1. The propeller-hub assembly is rotating around axis of the axle pins 81 that is perpendicular to the axis of the propeller rotation.

Figure 2 shows the propeller-hub assembly of a VTOL aircraft during a horizontal flight, specifically during a phase of flight when the motor 60 is turned off. This might be a necessary design requirement if the rotor is not used during this flight phase. The blades 31 that are pivoted around the pins 33 are folded back due to the air pressure. This is a standard folding propeller feature that is reducing the drag. This is possible because the blades extension parts 32 are no longer pressed by the bedplate pins 11 since the rounded element 14 of the push rod 12 is now pressing against the restraint plate 80 with the force 200 (illustrated in fig. 6) and therefore the spring 40 is being compressed and the bedplate 10 is shifted in a rotational direction towards the spinner 50. During a certain point of the outbound transition which direction is represented by the arrow 300 in Figure 1, rounded element 14 comes into contact with the upper surface 82 of the restraint plate 80 and gradually into the position shown in Figure 2, where rounded element 14 is pressing against the surface 82 and the push rod 12 is positioned perpendicular with respect to said surface.

Figure 3 illustrates a rotor of a VTOL aircraft during a horizontal flight when the motor is running. This might be the design requirement if the propeller rotor is used during this flight phase either as the main propeller or an auxiliary one, where in case of the main propeller rotor failure the auxiliary propeller rotor is providing the necessary redundancy to the aircraft. The blades 31 are in the opened extended position due to the centrifugal force caused by the motor 60 generating rotation in the direction of the arrow 350. If the motor 60 is shut down the blades 31 will fold back into the position as shown in Figure 2. The outbound transition is opposite of the one shown by arrow 300 and leads from the configuration shown in Figures 2 and 3 into the rotor configuration as shown in Figure 1.

Mechanical simplicity of the embodiment as shown in Figures 1 to 4 is making this embodiment suitable for smaller VTOL aircrafts up to 100 kg mass or the like. For larger aircraft, the simple mechanism of the rounded element 14 that presses against the surface 82 of the restraint plate 80 and therefore causing the compression of the coil spring 40 and free rotation of the propeller blades 31 might be replaced with hydraulic, pneumatic, electric or similar device. As well, force 100 maintained by the compression spring 40 can be maintained by other devices such as electromagnetic, pneumatic or hydraulic devices working on the principle of servo motors or linear actuators. Rotation of the spinner 50, the compression coil spring 40, the bedplate 10, the propeller-hub 20, the motor 60 and the rotating plate 70 is provided by any motor such as electric brushless or brushed motor or internal combustion motor.

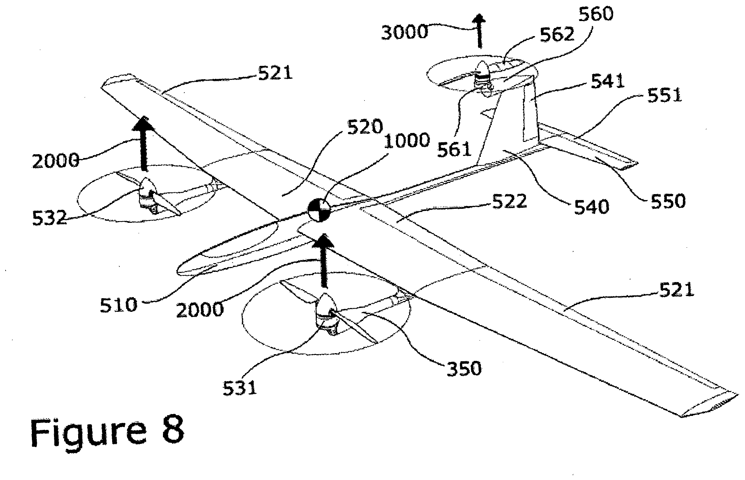

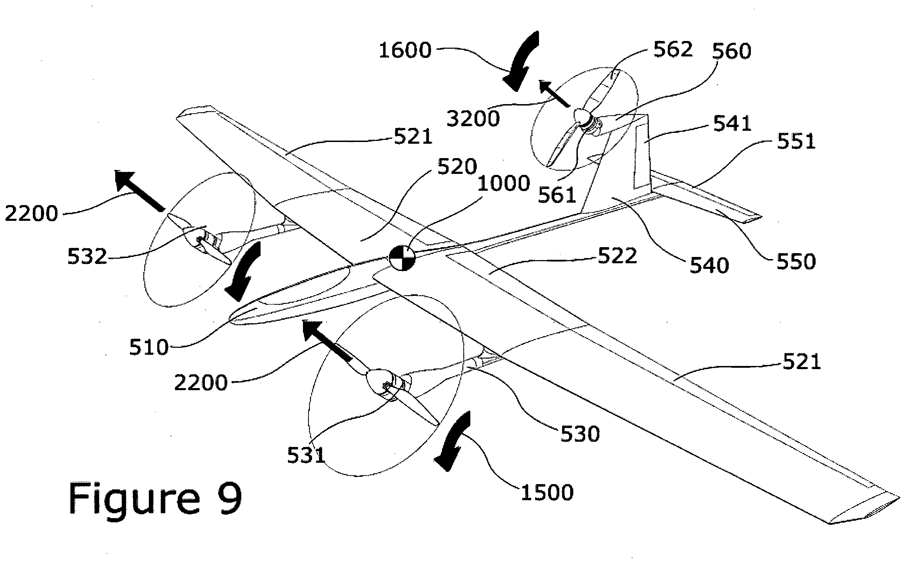

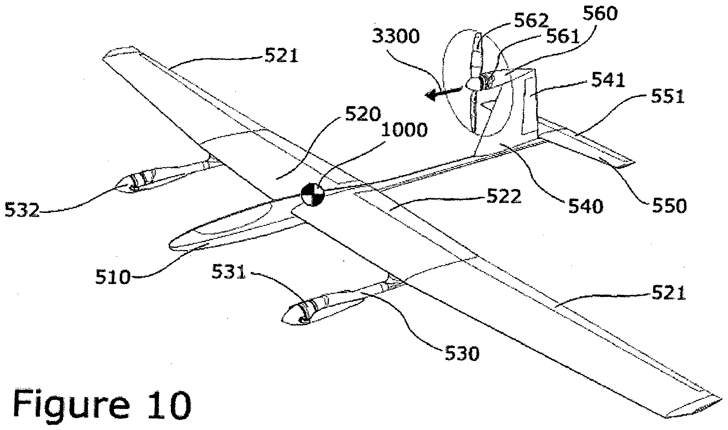

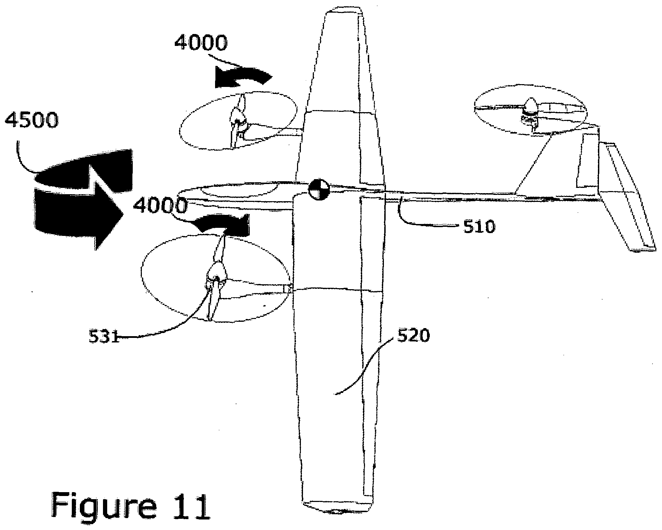

Figures 8 to 11 illustrate a VTOL aircraft according to present invention, where figure 8 illustrates a VTOL aircraft in vertical take-off mode, figure 9 illustrates a VTOL aircraft during a transition from vertical to horizontal flying mode, and figure 10 illustrates a VTOL aircraft during a forward flight mode. The VTOL aircraft generally features a fuselage 510, wings 520, an airleron 521, flaps 522, front nacelles 530, and front propeller-hub assemblies 531, 532 according to present invention, a vertical stabilizer 540, a rudder 541, a horizontal stabilizer 550, an elevator 551, a rear nacelle 560 and a rear propeller-hub assembly 561 according to the present invention. The VTOL aircraft comprises of at least one propeller-hub assembly, where at least two front propeller-hub assemblies 531; 532 are placed in front of the aircraft center of gravity 1000, and one rear propeller-hub assembly 561 is placed on the tail 540. Referring to figs. 8 to 11, the VTOL aircraft consist of the fuselage 510, a high aspect ratio of the wing 520, the horizontal stabilizer 550 and the vertical stabilizer 540 as well as three propeller-hub assemblies 531, 532 and 561 arranged in a such a way where two propeller-hub assemblies are placed in front of the aircrafts centre of gravity 1000 (CG) and one behind aircrafts CG 1000. The front propeller-hub assemblies 531, 532 are placed on the underside of a wings 520.These propeller-hub assemblies 531, 532 and 561 can be rotated by an angle that is in the range between 85 and 95 degrees about an axis which is perpendicular to the axis of propeller rotation. Figure 11 illustrates a yaw control of the VTOL aircraft which is obtained by rotating the front propeller-hub assemblies 531, 532 by an angle in the range between 0 to 25 degrees. As illustrated in figure 11, yaw motion of the VTOL aircraft is enabled by oppositely rotating the front propeller-hub assemblies 531, 532.

Figure 8 illustrates the VTOL aircraft during a vertical take-off and landing or hover mode, where all three of the propeller-hub assemblies 531, 532 and 561 are orientated upwards and motors 60 are running, providing three thrust vectors 2000, 3000 that are in equilibrium around aircraft centre of gravity.

Figure 10 illustrates the VTOL aircraft during a forward flight mode, all three of the propeller-hub assemblies 531, 532 and 561 are orientated horizontally and the thrust is provided by the propeller-hub assembly 561 positioned at the tail 540, while the two front propeller-hub assemblies 531, 532 have their propellers folded back to cause less drag. In case of the failure propeller-hub assembly positioned at the tail 540, the two front propeller-hub assemblies 531, 532 can be turned on to provide a necessary thrust. This power redundancy is making an aircraft a very safe platform. In a glider mode of flight all three of the propeller-hub assemblies 531, 532 and 561 are orientated horizontally and have their propellers folded back to cause less drag. By turning on the motor (60) positioned at the tail 540, the propeller blades 562 are expanded due to the action of the centrifugal force providing forward thrust if necessary. The VTOL aircraft according to the present invention can be used as unmanned aerial vehicle (UAV), wherein VTOL UAV aircraft further comprises a flight control system configured to provide avionic control of the VTOL UAV in a take-off, landing and hover flying mode and in a horizontal flying mode, and a body encapsulating the flight control system.

### List of the reference numbers

10- bedplate
11-bedplate pin
12- push rod
13-bedtable guide
14-push rod rounded end
20-propeller-hub
21-propeller-hub central hole
22-slots on the propeller-hub
23-grip pin
31-propeller blade
32-propeller blade counterweight
33-propeller blade pin axis
34-propeller blade pin hole
40-compression coil spring
50-spinner
51-spinner bottom
60- motor with a hollow axle
61-motor propeller-hub attachment
62-hollow axle
63-motor rotor
64-motor stator
70-rotating plate
71-aperture on the rotating plate
80-restraint plate
81-axle pins
82-restraint base front surface
510-Fuselage
520-Wing
521-Airleron
522-Flaps
530-Front propeller-hub assembly nacelle
531-Front propeller-hub assembly
532- Front propeller-hub assembly
540-Vertical stabilizer
541-Rudder
550-Horizontal stabilizer
551-Elevator
560-Rear propeller-hub assembly nacelle
561-Rear propeller-hub assembly
562-Rear propeller
1000- CG, center of gravity
1500-Front tilting direction
1600-Rear tilting direction
2000-Front thrust vector
2200-Front thrust vector during a transition
3000-Rear thrust vector
3200-Rear thrust vector during a transition
4000-Tiltrotor rotation around aircraft's y axis
4500-Yaw rotation of the aircraft around z axis

## Claims

1. A propeller-hub assembly for a vertical take-off and landing (VTOL) aircraft, the propeller-hub assembly having a rotational axis, and comprising:
a plurality of propeller blades (31);
a motor (60) arranged between a propeller-hub (20) and a plate (70);
a push rod (12) positioned in a rotational axis along the propeller-hub assembly, wherein the push rod (12) is movable along the rotational axis of the propeller of the propeller hub assembly, **characterized by** that the propeller-hub assembly further comprising:
a bedplate (10) operably associated with the propeller-hub (20) to fold or respectively unfold the plurality of propeller blades (31);
a device (40), said device being a compression spring or an electromagnetic, pneumatic or hydraulic device working on the principle of servo motors or linear actuators, for maintaining a force (100) between a spinner (50) and the bedplate (10), the device (40) is arranged within the spinner (50) and operably associated with the bedplate (10);
the push rod (12) operably associated with the device (40);
a restraint plate (80) by virtue of the push rod (12) operably associated with the device (40), where if the push rod (12) is being pushed by the restraint plate (80) the device (40) enables the propeller blades (31) to fold into a stowed position, if the motor (60) is not running, or, if the motor (60) is running, due to the action of centrifugal force, the propeller blades (31) are forced into an expanded position; wherein the push rod (12) extends from the bedplate (10) up to the restraint plate (80) and is movable along the rotational axis of the propeller-hub assembly; wherein the propeller-hub assembly is rotatably arranged in respect to the restraint plate (80).

2. The propeller-hub assembly according to claim 1, wherein each blade (31) comprises an extension part (32), the extension part (32) has a parallelepiped shape having one outer curved surface that abuts and is positioned under bedplate pins (11), along which said curved surface the bedplate pins (11) slide as they move along the rotational axis under the action of the device (40) and thereby interchange the position of each blade (31) from folded into expanded position.

3. The propeller-hub assembly according to claims 1 and 2, wherein each propeller blade (31) is connected to the propeller-hub (20) by means of a grip pin (23) extending from the propeller-hub (20) and a propeller blade pin axis (33), where each propeller blade (31) rotates about the propeller blade pin axis (33), the propeller blade pin axis (33) is passing throughout a propeller blade pin hole (34) of the extension part (32).

4. The propeller-hub assembly according to claim 1, wherein the restraint plate (80) is connected to a fuselage (90) with its upper surface (82) pivotally connected to the plate (70) by the means of axle pins (81), wherein the plate (70) in respect to the restraint plate (80) rotates by an angle that is in the range between 85° and 95°.

5. The propeller-hub assembly according to claim 1, wherein the spinner (50), the device (40), the bedplate (10), the propeller-hub (20), the motor (60) and the plate (70) are arranged in sequence next to each other along the rotational axis, where all said subsequently aligned components rotate by an angle that is in the range between 85° and 95° in respect to the fuselage (90), wherein when all components are perpendicular to the fuselage (90) the propeller-hub assembly is in take-off or landing, or hover flying mode, and when all said components are aligned with the fuselage (90) the propeller-hub assembly is in horizontal flying mode.

6. The propeller-hub assembly according to claim 1, wherein the push rod (12) is firmly attached to the bedplate (10), the push rod (12)extends through the propeller-hub (20), a hollow axle (61) of the motor (60), and an aperture (71) on the plate (70).

7. The propeller-hub assembly according to claim 6, wherein a rounded ball like element (14) is firmly attached to a free end of the push rod (12), the ball like element (14) under the force (100) maintained by the device (40) directly presses against the surface (82) of the restraint plate (80), when the propeller-hub assembly is in horizontal airplane flying mode.

8. The propeller-hub assembly according to claim 1, wherein the bedplate (10) has a circular shape where the underside of the bedplate (10) is provided with a plurality of bedplate tie rods (13) arranged perpendicularly and underside to the bedplate (10), each bedplate tie rod (13) is extending in the direction of the propeller-hub (20).

9. The propeller-hub assembly according to claim 8, wherein each bedplate tie rod (13) is provided with the bedplate pin (11) arranged perpendicular to the bedplate tie rod (13), the bedplate pin (11) is extending outwardly and is positioned above the extension part (32) of each blade (31).

10. The propeller-hub assembly according to claim 8, wherein a top of the propeller-hub (20) is provided with a plurality of slots (22) arranged to receive the bedplate tie rods (13) in order to provide coupling between the bedplate (10) and the propeller-hub (20).

11. The propeller-hub assembly according to claim 1, wherein rotation of the propeller-hub assembly in respect to the restraint plate (80) is provided by any motor such as such as electric brushless or brushed motor, or internal combustion motor.

12. A vertical take-off and landing (VTOL) aircraft comprising at least one propeller-hub assembly according to claim 1, wherein each propeller-hub assembly comprises a motor (60) driving a plurality of propeller blades (31), the propeller-hub assembly is rotatably arranged in respect to a restraint plate (80), wherein the restraint plate (80) is connected to a fuselage (90), where at least two front propeller-hub assemblies (531; 532) are placed in front of the aircraft center of gravity (1000), and one rear propeller-hub assembly (561) is placed on the tail (540);
wherein the propeller-hub assemblies (531, 532, 561) provide two modes of operation, the first mode of operation wherein all propeller-hub assemblies (531, 532, 561) are perpendicular to the fuselage (90) and the blades (31) are in opened position regardless if the motors (60) are running or not, and the second mode of operation wherein all propeller-hub assemblies (531, 532, 561) are aligned with the fuselage (90) wherein if the motors (60) are not running the blades (31), due to the air pressure, are folded into a stowed position, or if the motors (60) are turned on, due to the centrifugal force, the blades (31) are expanded and provide forward thrust of the VTOL aircraft.

13. The aircraft according to claim 12, wherein a yaw control of the aircraft is obtained by rotating the front propeller-hub assemblies (531, 532) for an angle in the range between 0 to 25 degrees.

14. The aircraft according to claim 12, wherein the aircraft is VTOL unmanned aerial vehicle (UAV).

15. The aircraft according to claim 12, wherein the aircraft further comprises a flight control system configured to provide autonomous control of the VTOL UAV in a take-off, landing and hover flying mode and in a horizontal flying mode; and a low drag body encapsulating the flight control system.

## Patentansprüche

1. Propeller-Naben-Baugruppe für ein vertikales Start- und Landeflugzeug (VTOL), wobei die Propeller-Naben-Baugruppe eine Drehachse aufweist und Folgendes umfasst:
eine Vielzahl von Propellerblättern (31);
einen Motor (60), der zwischen einer Propellernabe (20) und einer Platte (70) angeordnet ist;
eine Schubstange (12), die in einer Drehachse entlang der Propeller-Naben-Baugruppe positioniert ist, wobei die Schubstange (12) entlang der Drehachse des Propellers der Propeller-Naben-Baugruppe bewegbar ist, **dadurch gekennzeichnet** Propeller-Naben-Baugruppe ferner umfassend:
eine Grundplatte (10), die betriebsfähig mit der Propellernabe (20) verbunden ist, um die Propellerblätter (31) zusammenzufalten oder zu entfalten;
eine Vorrichtung (40), entsprechende Vorrichtung ist eine Druckfeder oder eine elektromagnetische, pneumatische oder hydraulische Vorrichtung , die nach dem Prinzip von Servomotoren oder Linearantrieben arbeitet, um eine Kraft (100) zwischen einem Spinner (50) und der Grundplatte (10) aufrechtzuerhalten. die Vorrichtung (40) befindet sich innerhalb der Schleuder (50) und ist betriebsfähig mit der Grundplatte (10) verbunden;
die Schubstange (12), die betriebsfähig mit der Vorrichtung (40) verbunden ist;
eine Rückhalteplatte (80) die kraft der Schubstange (12), betriebsfähig mit der Vorrichtung (40) verbunden ist, wobei, wenn die Schubstange (12) durch die Rückhalteplatte (80) geschoben wird, gibt die Vorrichtung (40) den Propeller frei um die Propellerblätter (31) in eine eingezogene Position zu klappen, wenn der Motor (60) nicht läuft, oder wenn der Motor (60) aufgrund der Wirkung der Zentrifugalkraft läuft, werden Propellerblätter (31) in eine ausgefaltete Position gezwungen; hierbei erstreckt sich die Schubstange (12) von der Grundplatte (10) bis zur Rückhalteplatte (80) und ist entlang der Drehachse der Propeller-Naben-Anordnung bewegbar; die Propeller-Naben-Anordnung ist in Bezug zur Rückhalteplatte (80) drehbar gelagert.

2. Propeller-Naben-Anordnung nach Anspruch 1, wobei jedes Propellerblatt (31) einen Verlängerungsteil (32) aufweist, der Verlängerungsteil (32) wiederum weist eine Parallelepipedform mit einer nach außen gekrümmten Oberfläche auf, die an den Grundplattenstiften (11) anliegt und unter diesen positioniert ist. Entlang dieser gekrümmten Oberfläche gleiten die Grundplattenstifte (11), wenn diese sich unter der Wirkung der Vorrichtung (40) entlang der Drehachse bewegen, und dadurch die Position jedes Propellerblatt (31) von einer gefalteten in eine expandierte Position wechseln.

3. Propellernabenanordnung nach Ansprüche 1 und 2, wobei jedes Propellerblatt (31) mit der Propellernabe (20) mittels eines Griffstifts (23) verbunden ist, ausgehend von der Propellernabe (20) und der Propellerblattstiftachse (33), an der sich jedes Propellerblatt (31) um die Propellerblattstiftachse (33) dreht, verläuft die Propellerblattstiftachse (33) durch ein Propellerblattstiftloch (34) des Verlängerungsteils (32).

4. Propeller-Naben-Baugruppe nach Anspruch 1, wobei die Rückhalteplatte (80) mit einem Rumpf (90) verbunden ist, dessen obere Oberfläche (82) mittels Achsstiften (81) schwenkbar mit der Platte (70) verbunden ist, wobei sich die Platte (70) gegenüber der Rückhalteplatte (80) um einen Winkel dreht, der im Bereich zwischen 85 ° und 95 ° liegt.

5. Propeller-Naben-Anordnung nach Anspruch 1, wobei die Schleuder (50), die Vorrichtung (40), die Grundplatte (10), die Propeller-Nabe (20), der Motor (60) und die Platte (70) entlang der Rotationsachse nebeneinander angeordnet sind, wobei sich daraufhin alle ausgerichteten Bauteile um einen Winkel drehen, der im Bereich zwischen 85 ° und 95 ° zum Rumpf (90) liegt, wobei wenn alle Bauteile senkrecht zum Rumpf (90) stehen, befindet sich die Propeller-Naben-Baugruppe im Start-, Lande- oder im Schwebeflugmodus. Wenn alle genannten Komponenten entlang des Rumpfes (90) ausgerichtet sind, befindet sich die Propeller-Naben-Baugruppe im horizontalen Flugmodus.

6. Propeller-Naben-Anordnung nach Anspruch 1, wobei die Schubstange (12) fest mit der Grundplatte (10) verbunden ist, wobei die Schubstange (12) durch die Propeller-Nabe (20) verläuft , eine Hohlachse (61) ausgehend vom Motor (60) und eine Öffnung (71) in der Platte (70).

7. Propeller-Naben-Anordnung nach Anspruch 6, wobei ein abgerundetes kugelähnliches Element (14) fest an einem freien Ende der Schubstange (12) angebracht ist, wobei das kugelähnliche Element (14), unter der Kraft (100), die durch die Vorrichtung (40) aufrechterhalten wird, direkt gegen die Oberfläche (82) der Rückhalteplatte (80) drückt, wenn sich die Propeller-Naben-Anordnung im Horizontalflugmodus befindet.

8. Propeller-Naben-Anordnung nach Anspruch 1, wobei die Grundplatte (10) eine kreisförmige Form aufweist, und die Unterseite der Grundplatte (10) mit einer Vielzahl von Grundplatten-Zugstangen (13) versehen ist, die senkrecht und unterseitig zur Grundplatte angeordnet sind (10), jede Grundplatten-Zugstange (13) erstreckt sich in Richtung der Propellernabe (20).

9. Propeller-Naben-Anordnung nach Anspruch 8, wobei jede Grundplatten-Zugstange (13) mit einem Grundplattenstift (11) versehen ist, der senkrecht zur Grundplatten-Zugstange (13) angeordnet ist, und der Grundplattenstift (11) erstreckt sich nach außen und ist positioniert über dem Verlängerungsteil (32) jedes Propellerblatt (31).

10. Propeller-Naben-Anordnung nach Anspruch 8, wobei eine Oberseite der Propeller-Nabe (20) mit einer Vielzahl von Schlitzen (22) versehen ist, die angeordnet sind, um die Grundplatten-Zugstangen (13) aufzunehmen, und somit eine Kopplung zwischen der Grundplatte (10) und der Propellernabe (20) zu schaffen.

11. Propeller-Naben-Baugruppe nach Anspruch 1, wobei die Drehung der Propeller-Naben-Baugruppe in Bezug zur Rückhalteplatte (80) durch einen Motor , wie zum Beispiel einen elektrischen bürstenlosen- oder einen elektrischen Motor mit Bürsten oder einen Verbrennungsmotor hervorgerufen wird.

12. Vertikalstart- und Landeflugzeug (VTOL) Flugzeug, umfasst mindestens eine Propeller-Naben-Anordnung nach Anspruch 1, wobei jede Propeller-Naben-Anordnung einen Motor (60) beinhaltet, der eine Vielzahl von Propellerblättern (31) und den Propeller antreibt, die Nabenbaugruppe ist drehbar in Bezug zu einer Rückhalteplatte (80) angeordnet, wobei die Rückhalteplatte (80) mit einem Rumpf (90) verbunden ist, an dem mindestens zwei vordere Propeller-Naben-Baugruppen (531; 532) im Flugzeugschwerpunkt (1000) platziert sind und eine hintere Propeller-Naben-Anordnung (561) am Heck (540) positioniert ist; wobei die Propeller-Naben-Anordnungen (531, 532, 561) zwei Betriebsmodi bereitstellen, der erste Betriebsmodus beinhaltet, dass alle Propeller-Naben-Anordnungen (531, 532, 561) senkrecht zum Rumpf (90) und den Blättern (31) stehen und diese sich in geöffneter Position befinden, unabhängig davon, ob die Motoren (60) laufen oder nicht, ferner der zweite Betriebsmodus, bei dem alle Propeller-Naben-Anordnungen (531, 532, 561) in Richtung des Rumpfes (90) ausgerichtet sind, wobei dann, wenn die Motoren (60) nicht laufen die Propellerblätter (31) aufgrund des Luftdrucks, in eine zusammengefaltete Position geklappt sind, oder wenn die Motoren (60) eingeschaltet sind, entfalten sich die Blätter (31) aufgrund der Zentrifugalkraft, und liefern den Schub in Flugrichtung des VTOL-Flugzeugs.

13. Flugzeug nach Anspruch 12, wobei eine Giersteuerung des Flugzeugs erhalten wird, indem die vorderen Propeller-Naben-Anordnungen (531, 532) um einen Winkel im Bereich zwischen 0 und 25 Grad gedreht werden.

14. Flugzeug nach Anspruch 12, wobei das Flugzeug ein unbemanntes VTOL-Luftfahrzeug (UAV) ist.

15. Flugzeug nach Anspruch 12, wobei das Flugzeug ferner ein Flugsteuerungssystem umfasst, das konfiguriert ist, um eine autonome Steuerung des VTOL-UAV in einem Start-, Lande- und Schwebeflugmodus und in einem Horizontalflugmodus bereitzustellen; und einen Flugzeugkörper mit geringem Luftwiderstand, der das Flugsteuersystem einkapselt.

## Revendications

1. Ensemble hélice-moyeu pour aéronef à décollage et atterrissage vertical (VTOL), l'ensemble hélice-moyeu ayant un axe de rotation, comprenant :
une pluralité de pales d'hélice (31);
un moteur (60) disposé entre un moyeu d'hélice (20) et une plaque (70);
une tige de poussée (12) positionnée dans un axe de rotation le long de l'ensemble hélice-moyeu, la tige de poussée (12) étant mobile le long de l'axe de rotation de l'hélice de l'ensemble moyeu d'hélice, **caractérisée en ce que** l'ensemble hélice-moyeu comprenant en outre :
une plaque de base (10) associée de manière opérationnelle au moyeu d'hélice (20) pour plier ou déplier respectivement pluralité de pales d'hélice (31);
un dispositif (40), le dit dispositif étant un ressort de compression ou un dispositif électromagnétique, pneumatique ou hydraulique fonctionnant sur le principe des servomoteurs ou des actionneurs linéaires, permettant de maintenir une force (100) entre une centrifugeuse (50) et la semelle (10), le dispositif (40) est agencé à l'intérieur de la centrifugeuse (50) et associé de manière opérationnelle à la plaque de base (10);
la tige de poussée (12) associée de manière opérationnelle au dispositif (40);
une plaque de retenue (80) grâce à la tige de poussée (12) associée de manière opérationnelle au dispositif (40), où, si la tige de poussée (12) est poussée par la plaque de retenue (80), le dispositif (40) active les pales d'hélice (31) à se remettre dans une position repliée, si le moteur (60) ne tourne pas ou, si le moteur (60) tourne, en raison de l'action de la force centrifuge, les pales d'hélice (31) sont forcées dans un position déployée; dans lequel la tige de poussée (12) s'étend de la plaque de base (10) jusqu'à la plaque de retenue (80) et est mobile le long de l'axe de rotation de l'ensemble hélice-moyeu; dans lequel l'ensemble propulseur-moyeu est agencé de manière rotative par rapport à la plaque de retenue (80).

2. Ensemble moyeu d'hélice selon la revendication 1, dans lequel chaque pale (31) comprend une extension (32), cette extension (32) ayant une forme parallélépipédique de surface extérieure incurvée qui vient en butée et est placée sous les broches de la plaque de base (11), le long de laquelle les surfaces de la plaque de base (11) glissent lorsqu'elles se déplacent le long de l'axe de rotation sous l'action du dispositif (40) et échangent ainsi la position de chaque lame (31) de la position repliée à la position déployée.

3. Ensemble moyeu d'hélice selon des revendications 1 et 2, dans laquelle chaque pale d'hélice (31) est reliée au moyeu d'hélice (20) au moyen d'un pion de préhension (23) partant du moyeu-hélice (20) et un axe de pale d'hélice (33), où chaque pale d'hélice (31) tourne autour de l'axe d'axe de la pale d'hélice (33), l'axe de pale d'hélice (33) traversant le trou de pale d'hélice (34) de la partie d'extension (32).

4. Ensemble moyeu d'hélice selon la revendication 1, dans lequel la plaque de retenue (80) est reliée à un fuselage (90) avec sa surface supérieure (82) reliée de manière pivotante à la plaque (70) par le moyen de goupilles (81), dans lequel la plaque (70) par rapport à la plaque de retenue (80) tourne selon un angle compris entre 85 ° et 95 °.

5. Ensemble moyeu d'hélice selon la revendication 1, dans laquelle (50), le dispositif (40), la plaque de base (10), le moyeu hélice (20), le moteur (60) et la plaque (70) sont disposés l'un à côté de l'autre le long de l'axe de rotation, dans lequel tous les composants alignés ultérieurement tournent d'un angle compris entre 85 ° et 95 ° par rapport au fuselage (90), dans lequel, lorsque tous les composants sont perpendiculaires au fuselage (90) l'ensemble propulseur-moyeu est en mode décollage, atterrissage ou vol stationnaire, et lorsque tous les composants précités sont alignés avec le fuselage (90), l'ensemble propulseur-moyeu est en mode vol horizontal.

6. Ensemble moyeu d'hélice selon la revendication 1, dans laquelle la tige de poussée (12) est fermement fixée à la semelle (10), la tige de poussée (12) s'étend à travers le moyeu d'hélice (20), un axe creux (61), le moteur (60) et l'ouverture (71) sur la plaque (70).

7. Ensemble hélice-moyeu selon la revendication 6, dans laquelle un élément en forme de bille arrondie (14) est fermement fixé à une extrémité libre de la tige de poussée (12), l'élément en forme de bille (14) étant maintenu sous la force (100) par le dispositif (40) appuie directement sur la surface (82) de la plaque de retenue (80), lorsque l'ensemble moyeu d'hélice est en mode de vol horizontal.

8. Ensemble moyeu d'hélice selon la revendication 1, dans laquelle la semelle (10) a une forme circulaire où la face inférieure de la semelle (10) est munie d'une pluralité de tirants de semelle (13) disposés perpendiculairement et sous la face inférieure de la semelle. (10), chaque biellette de plaque d'appui (13) s'étend dans la direction du moyeu d'hélice (20).

9. Ensemble moyeu d'hélice selon la revendication 8, dans laquelle chaque biellette de plaque de base (13) est munie de la broche de plaque de base (11) disposée perpendiculairement à la barre de liaison de plaque de base (13), la broche de plaque de base (11) s'étendant vers l'extérieur et est positionné au-dessus de la partie d'extension (32) de chaque lame (31).

10. Ensemble moyeu d'hélice selon la revendication 8, dans laquelle sommet du moyeu d'hélice (20) est pourvu d'une pluralité de fentes (22) agencées pour recevoir les tirants de plaque de base (13) afin de fournir un couplage entre plaque de base (10) et le moyeu d'hélice (20).

11. Ensemble moyeu d'hélice selon la demande 1, dans laquelle la rotation de l'ensemble moyeu d'hélice par rapport à la plaque de retenue (80) est assurée par un moteur électrique avec ou sans balai, ou un moteur à combustion interne.

12. Aéronef à décollage et atterrissage vertical (VTOL) comprenant au moins un ensemble moyeu d'hélice selon la revendication 1, dans laquelle chaque ensemble moyeu d'hélice comprend un moteur (60) entraînant plusieurs pales d'hélice (31), le moyeu d'hélice est disposé en rotation par rapport à une plaque de retenue (80), la plaque de retenue (80) étant reliée à un fuselage (90), et au moins deux ensembles moyeu d'hélice avant (531; 532) sont placés à l'avant du centre de gravité de l'aéronef (1000), et un ensemble moyeu d'hélice arrière (561) est placé sur la queue (540);
dans laquelle les ensembles moyeu d'hélice (531, 532, 561) fournissent deux modes de fonctionnement, le premier mode de fonctionnement dans lequel tous les ensembles moyeu d'hélice (531, 532, 561) sont perpendiculaires au fuselage (90) et aux pales (31) sont en position ouverte, que les moteurs (60) soient en marche ou non, et le second mode de fonctionnement dans lequel tous les ensembles moyeu d'hélice (531, 532, 561) sont alignés sur le fuselage (90), dans lequel les moteurs (60) ne font pas fonctionner les pales (31), en raison de la pression de l'air et sont repliées dans une position rangée ou, si les moteurs (60) sont allumés, en raison de la force centrifuge, les pales (31) sont déployées et poussent l' Aéronef VTOL vers l'avant.

13. Aéronef selon la revendication 12, dans laquelle une commande de lacet de l'aéronef est obtenue en faisant tourner les ensembles de moyeu d'hélice avant (531, 532) d'un angle compris entre 0 et 25 degrés.

14. Aéronef selon la revendication 12, dans laquelle l'aéronef est un véhicule aérien sans pilote (UAV) VTOL.

15. Aéronef selon la revendication 12, dans laquelle l'aéronef comprend en outre un système de commande de vol configuré pour fournir un contrôle autonome du drone VTOL en mode décollage, atterrissage et en vol stationnaire et en mode vol horizontal; et un corps à faible traînée encapsulant le système de contrôle de vol.
